# EUROPEAN PATENT APPLICATION

(11) **EP 3 910 000 A1**
(43) Date of publication of application: **17.11.2021**
(21) Application number: 20174166.7
(22) Date of filing: 12.05.2020
(51) Int. Cl.: C08G 63/183, C08G 63/78, C08J 11/24, C08K 3/22, C08K 3/30, C08K 5/00, C08K 5/353

(54) **SUSTAINABLE PBT COMPOSITIONS WITH IMPROVED COLOR CAPABILITY USING THE PURIFIED TEREPHTHALIC ACID PROCESS**

(71) Applicant: SHPP Global Technologies B.V., 4612 PX Bergen op Zoom (NL)
(72) Inventor: VOLLENBERG, Peter, Indiana, 47260 (US); GANDHI, Kaushal, Indiana, 47260 (US); KENCHAIAH, Lohith, 562125 Bangalore (IN); MEDIRATTA, Gaurav, 562125 Bangalore (IN); DASH, Ranjan, Pennsylvania, 19341 (US)
(74) Representative: Dehns

(57) **Abstract**

Thermoplastic compositions include from about 15 wt% to about 98 wt% of a polybutylene terephthalate (PBT) component, from about 2 wt% to about 10 wt% of at least one brightening agent and from 0 wt% to about 83 wt% of at least one additional component. The PBT component includes PBT derived from post-consumer or post-industrial recycled (PCR) polyethylene terephthalate (PET). In particular, the PBT may be derived from the PCR PET by first depolymerizing the PCR PET to form a high purity purified terephthalic acid and then polymerizing the PTA monomer with butane diol (BDO) to form the PBT. The thermoplastic compositions have an L* color value of at least about 94.

## Description

### FIELD OF THE DISCLOSURE

The present disclosure relates to thermoplastic compositions, and in particular thermoplastic compositions including polybutylene terephthalate derived from post-consumer or post-industrial recycled polyethylene terephthalate.

### BACKGROUND OF THE DISCLOSURE

An injection molding material must meet a number of requirements to be suitable for consumer centric applications such as personal electronics. In certain applications, the material must be producible in a bright white color. Color is typically not a problem for petrochemical-based injection molded products (commonly referred to as "virgin" materials), but it can be difficult to achieve certain colors when the injection molded material includes post-consumer or post-industrial recycled (PCR) components, such as those derived from waste polyethylene terephthalate (PET). This presents a particular challenge with consumer electronics markets (among others) looking to incorporate "sustainable materials" in the products.

Thermoplastic compositions including from about 5 to 50 wt% post-consumer or post-industrial materials and that have suitable physical performance have been developed. However, the residual colorants or other contaminants in the PCR materials prevent these compositions from having certain colors, and in particular a bright white color. It is desirable to achieve a material suitable for personal electronic devices where the material includes PCR materials and has a suitably white color.

These and other shortcomings are addressed by aspects of the disclosure.

### SUMMARY

Aspects of the disclosure relate to a method for forming a thermoplastic composition, comprising: forming a PTA monomer by depolymerizing post-consumer or post-industrial recycled (PCR) polyethylene terephthalate (PET); polymerizing the PTA monomer under conditions effective to form polybutylene terephthalate (PBT); and combining from about 15 wt% to about 98 wt% of the PBT, from about 2 wt% to about 10 wt% of at least one brightening agent, and from 0 wt% to about 83 wt% of at least one additional component, to form the thermoplastic composition..

Aspects of the disclosure further relate to a thermoplastic composition comprising from about 15 wt% to about 98 wt% of a polybutylene terephthalate (PBT) component; from about 1 wt% to about 10 wt% of at least one brightening agent; and from 0 wt% to about 83 wt% of at least one additional component, wherein the PBT component comprises PBT derived from post-consumer or post-industrial recycled (PCR) polyethylene terephthalate (PET), wherein the PBT is derived from PCR PET by first depolymerizing the PCR PET to form a purified terephthalic acid PTA monomer, and then polymerizing the PTA monomer under conditions effective to form the PBT, and wherein the thermoplastic composition has an L^{∗} color value of at least about 94.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a process flow diagram showing a conventional process for forming polybutylene terephthalate using PCR PET as a precursor component.
FIG. 2 is a reaction scheme for forming purified terephthalic acid according to aspects of the present disclosure.
FIG. 3 is a reaction scheme for forming polybutylene terephthalate according to aspects of the disclosure via a purified terephthalic acid pathway.

### DETAILED DESCRIPTION

Aspects of the disclosure include thermoplastic compositions including polybutylene terephthalate (PBT) polymers derived from post-consumer or post-industrial recycle based components. Such PBT polymers may be referred to as "up-cycled" polymers. In such processes the post-consumer or post-industrial recycled (collectively referred to herein as "PCR") polyethylene terephthalate (PET) is depolymerized to monomers such as the terephthalate-containing monomer bis(2-hydroxyethyl) terephthalate (BHET) and ethylene glycol (EG). Subsequently, the BHET may be reacted with sodium hydroxide under conditions effective to form a sodium terephthalate. The sodium terephthalate may be purified and treated with a suitable acid to form a purified terephthalic acid (PTA). The PTA may be to form the PBT.

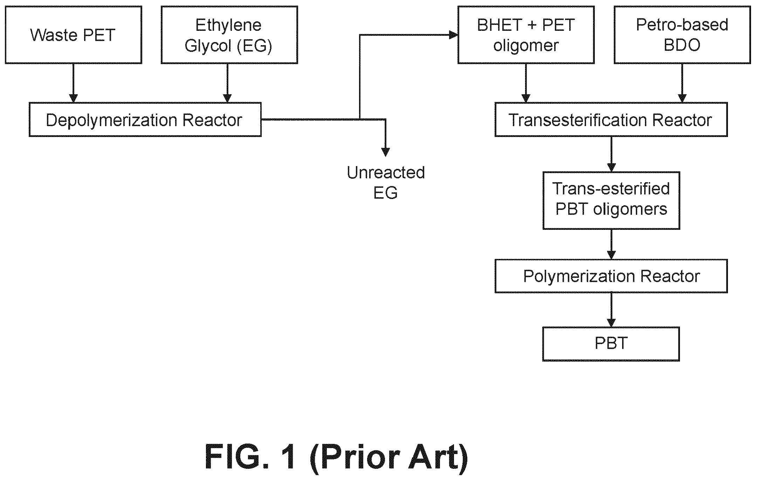

An example of a conventional process for forming PBT from PCR PET is shown in FIG. 1. As shown, waste PET is combined with ethylene glycol (EG) in a depolymerization reactor operating at, e.g., 230 degrees Celsius (°C) and a pressure of 3.5 bar. The resulting oligomer product includes BHET, EG and PET monomers. This product is combined with BDO in a transesterification reactor operating at, e.g., 230-245 °C and under a 500 millibar (mbar) vacuum to form a trans-esterified PBT oligomer product; EG is distilled out during transesterification. The trans-esterified PBT oligomer product is then polymerized in a polymerization reactor operating at, for example, less than 1 mbar to form the PBT.

The PBT formed from this conventional process may have acceptable physical performance characteristics, but it has not been able to be produced in a bright white color, as measured by an L^{∗} of greater than 94 determined according to the CIELab (International Commission on Illumination) color space. That deficiency is addressed by aspects of the present disclosure.

Disclosed herein, post-consumer or post-industrial recycle based components are "up-cycled" as polybutylene terephthalate (PBT) polymers. The term "up-cycled "as it relates to the present disclosure may describe a process where post-consumer or post-industrial recycled polyethylene terephthalate (PET) is chemically treated back to substituent monomers. Such monomers may include the terephthalate containing monomer bis(2-hydroxyethyl) terephthalate (BHET) and ethylene glycol (EG). In these existing such processes, BHET is polymerized with Butane Diol (BDO) to create PBT.

According to aspects of the present disclosure, terephthalic acid (TPA) or more specifically, a purified terephthalic acid (PTA), is a suitable monomer containing a terephthalic moiety that can be polymerized with BDO to create PBT. The disclosed PTA pathway may be more economically attractive than alternatives. High purity PTA has been used to provide PBT resin (natural and in the absence of colorants) having an L^{∗} color value of at least 83 when observed on an injection molded part. High purity PTA may be derived from high purity PCR PET. For example, high purity PTA may refer to greater than 95 %, greater than 99%, or greater than 99.5% purity PTA.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

### Thermoplastic Compositions and Suitable Reagents for Formation

In some aspects, the present disclosure provides a thermoplastic composition comprising a polyester. As an example, the polyester composition comprises repeating terephthalate units derived from at least one terephthalic acid monomer. The terephthalic acid monomer may be derived from post-consumer recycled or post-industrial recycled polyethylene terephthalate. The terephthalic acid monomer has a purity of at least 95%.

In more specific aspects, the present disclosure relates to thermoplastic compositions including: from about 15 wt% to about 98 wt% of a polybutylene terephthalate (PBT) component; from about 1 wt% to about 10 wt% of at least one brightening agent; and from 0 wt% to about 83 wt% of at least one additional component. The PBT component includes PBT derived from post-consumer or post-industrial recycled (PCR) polyethylene terephthalate (PET), wherein the PBT is derived from PCR PET by first depolymerizing the PCR PET to form a purified terephthalic acid PTA monomer, and then polymerizing the PTA monomer under conditions effective to form the PBT. The thermoplastic composition may exhibit an L^{∗} color value of at least about 94. In other aspects the thermoplastic composition has an L^{∗} color value of at least about 96, or an L^{∗} color value of at least about 97.

A number of methods may be suitable as conditions effective to form PBT by polymerizing the PTA monomer. As an example, and not intended to be limiting, the PTA monomer may be polymerized in the presence of a suitable catalyst (such as, for example, a titanium based catalyst) at a particular temperature and pressure. A suitable titanium catalyst may comprise titanium isopropoxide. For example, PTA polymerization may proceed in the presence of a suitable catalyst at a temperature from 200 °C to 240 °C, under 500 mbar vacuum pressure.

In some aspects the PBT component includes PBT derived from PCR PET by first depolymerizing the PCR PET to form a high purity bis(2-hydroxyethyl) terephthalate (BHET) monomer, and then polymerizing the high purity BHET monomer with sodium hydroxide to form a PTA monomer. The PBT component may comprise PBT generated from a purified terephthalic acid (PTA) monomer wherein the PTA monomer is derived from a post-consumer or post-industrial recycled (PCR) polyethylene terephthalate (PET), and wherein the thermoplastic composition has an L^{∗} color value of at least about 94. The PTA monomer may be reacted under conditions effective to form the PBT.

PTA has a structure represented by the formula

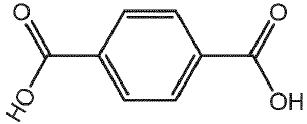

In particular aspects, the high purity PTA monomer has a purity of at least about 95%, of at least 99%, of at least 99.5%. This is in contrast to conventional methods for making PBT from PCR PET in which the BHET monomer had a purity of less than 80% or even less than 40%. It has been found that by using a high purity BHET monomer derived from PCR PET to form the PTA, which is then polymerized to PBT, a PBT composition having a bright white color (L^{∗} value greater than 94 such as greater than 96 or greater than 97) can be formed.

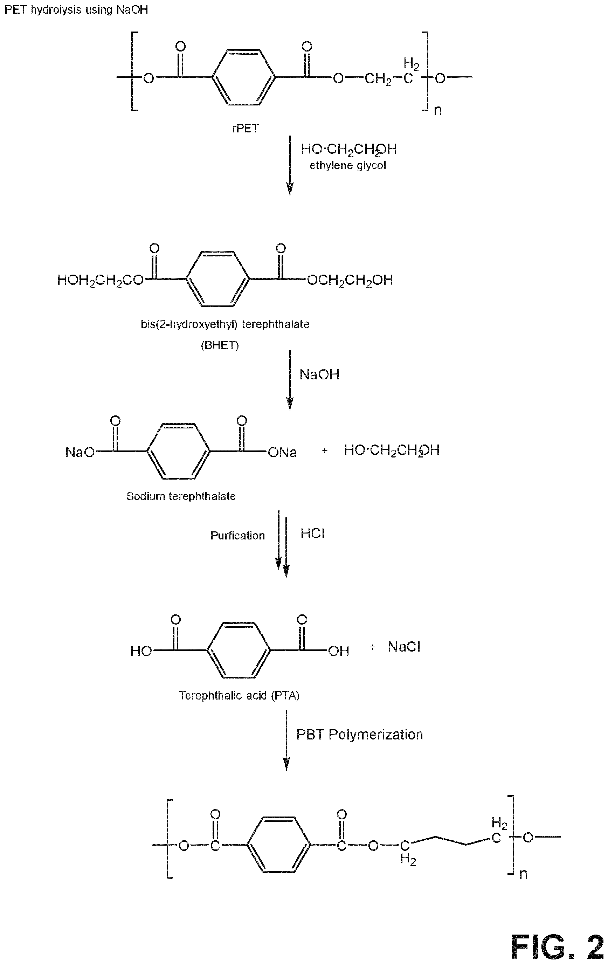

Methods of making the PBT component may comprise forming a terephthalic acid monomer from a post-consumer recycled polyethylene terephthalate. The PBT component may be a polyester formed from repeating units of the terephthalic acid monomer. In further aspects, the PBT component includes PBT derived from PCR PET by first depolymerizing the PCR PET to form a high purity bis(2-hydroxyethyl) terephthalate (BHET) monomer, and then polymerizing the high purity BHET monomer with sodium hydroxide to form a PTA monomer. The PTA monomer may be reacted under conditions effective to form the PBT. This process of preparing the PTA monomer may be performed in accordance with reference to FIG. 2. Here, for example, BHET and sodium hydroxide are reacted to form sodium terephthalate and ethanol. After purification and the addition of hydrochloric acid, terephthalic acid and sodium chloride are obtained.

BHET has a structure represented by the formula:

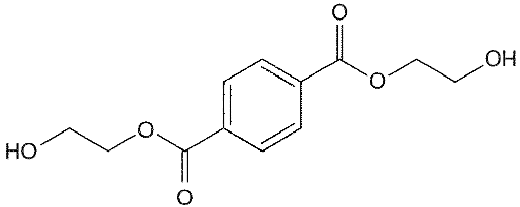

In particular aspects, the high purity BHET monomer has a purity of at least about 95%, or at least 98%, or at least 99%, or at least 99.5%, or at least 99.8%. This is in contrast to conventional methods for making PBT from PCR PET in which the BHET monomer had a purity of less than 80% or even less than 40%. It has been found that by using a high purity BHET monomer derived from PCR PET to form the PTA, which is then polymerized to PBT, a PBT composition having a bright white color (L^{∗} value greater than 94 such as greater than 96 or greater than 97) can be formed.

There are a number of processes by which the obtained purified The obtained PTA monomer may be reacted under conditions effective to form PBT, that is, the PTA may be polymerized to form PBT as shown in FIG. 2. As an example, but not to be limiting, PBT may be synthesized via a melt polymerization in a two-step process from the obtained PTA.

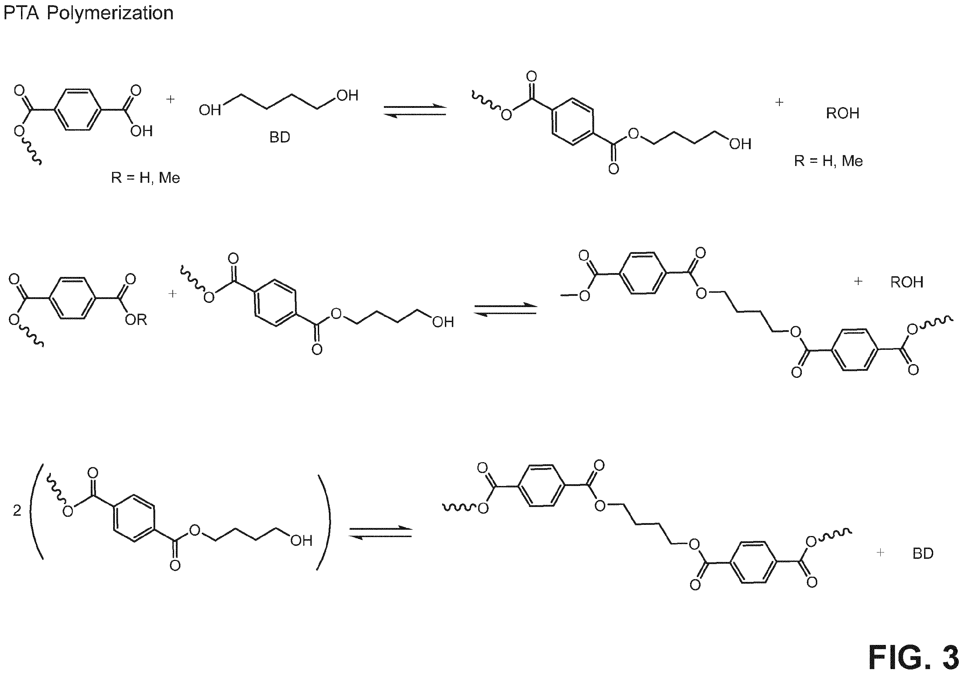

An example pathway is shown in FIG. 3. First, the PTA may be reacted with an excess of butane diol (BD or BDO) at atmospheric pressure to provide oligomers containing hydroxybutyl ester end-groups. In the second step, the temperature is increased to remove excess BD under vacuum pressure yielding high molecular weight PBT product equivalents.

While in certain processes BDO may be petroleum-based, in various aspects of the disclosure the BDO may be bio-based. Thus the BDO may be petroleum-based or bio-based according to aspects of the present disclosure. Bio-based BDO does not include residual colorants and impurities such as those found in PCR PET moieties, so it is believed that no effect on color would be observed when substituting bio-based BDO for petroleum-based BDO. Butane diol has a structure represented by the formula:

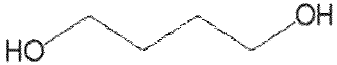

The thermoplastic composition may include from about 15 wt% to about 98 wt% of the PBT component. In some aspects the thermoplastic composition includes from about 15 wt% to about 90 wt% of the PBT component, or from about 15 wt% to about 50 wt% of the PBT component, or from about 15 wt% to about 60 wt% of the PBT component, or from about 15 wt% to about 30 wt% of the PBT component, or from about 15 wt% to about 25 wt% of the PBT component. In certain aspects, the composition may comprise from about 15 wt% to about 60 wt% of the PBT component, and wherein the composition has an L^{∗} color value of at least about 96. In yet further aspects, the composition may comprise from about 15 wt% to about 30 wt% of the PBT component, and wherein the composition has an L^{∗} color value of at least about 97.

Any suitable brightening agent may be used. In particular aspects the at least one brightening agent includes titanium dioxide (TiO₂), zinc sulfide (ZnS), or a combination thereof. The composition may include from about 2 wt% to about 10 wt% of the at least one brightening agent, or in particular aspects from about 2 wt% to about 5 wt% of the at least one brightening agent based on the total weight of the composition.

In certain aspects the thermoplastic composition further includes a fluorescent whitening agent, which can contribute to the composition having further improved color properties. Any suitable fluorescent whitening agent may be used; one particular example is Eastobrite™ OB-1, available from Eastman. The fluorescent whitening agent, if included, may have a content of from greater than 0 wt% to about 0.5 wt%, or from 0.01 wt. % to 0.5 wt. %, or from 0.01 wt. % to 0.1 wt. %, or from 0.01 wt. % to from 0.08 wt. %, in the composition in some aspects.

In yet further aspects of the present disclosure, the thermoplastic composition may be a natural color. That is, the thermoplastic composition may not include a colorant or a brightening agent or a pigment or a combination thereof. For example, the thermoplastic composition may be free of or substantially free of a colorant, a brightening agent, a whitening agent, or a pigment.

The thermoplastic composition further includes from 0 wt% to about 83 wt% of at least one additional component. The at least one additional component may include, but is not limited to, an additional thermoplastic polymer (e.g., polycarbonate and copolymers thereof), a filler, an impact modifier, a pigment, a whitening agent, a surfactant, a processing aid, a thermal stabilizer, a flame retardant, a photochemical stabilizer or a combination thereof. In particular aspects the thermoplastic composition includes one or more of the following additional components: from greater than 0 wt% to about 45 wt% polycarbonate (e.g., bisphenol A polycarbonate); from greater than 0 wt% to about 35 wt% filler (for example, glass fiber); from greater than 0 wt% to about 30 wt% of a polycarbonate copolymer; from greater than 0 wt% to about 15 wt% of an impact modifier; and from greater than 0 wt% to about 10 wt% of a flame retardant.

In further aspects, the at least one additional component may comprise one or more additional additives. The one or more additional additives may further include, but are not limited to, a reinforcing agent, an impact modifier, an enhancer, an acid scavenger, an anti-drip agent, an antioxidant, an antistatic agent, a chain extender, a colorant, a de-molding agent, a flow promoter, a flow modifier, a lubricant, a mold release agent, a plasticizer, a quenching agent, a flame retardant, an ultraviolet (UV) absorbing additive, a UV reflecting additive, a UV stabilizer, a siloxane, or a combination thereof. In a particular aspect, the one or more additional additives includes an impact modifier including a styrene and ethylene/butylene (SEBS) copolymer, a polyester ether elastomer/ethylene ethylacrylate copolymer, or a combination thereof.

Suitable mold releasing agents include for example, metal stearate, stearyl stearate, pentaerythritol tetrastearate, beeswax, montan wax, paraffin wax, or the like, or combinations including at least one of the foregoing mold release agents. Mold releasing agents are generally used in amounts of from 0.01 wt. % to 2 wt. % based on 100 parts by weight of the total composition, excluding any filler.

Suitable heat stabilizers include, for example, organo phosphites such as triphenyl phosphite, tris-(2,6-dimethylphenyl)phosphite, tris-(mixed mono-and inonylphenyl) phosphite or the like; phosphonates such as dimethylbenzene phosphonate or the like, phosphates such as trimethyl phosphate, or the like, or combinations including at least one of the foregoing heat stabilizers. Heat stabilizers are generally used in amounts of from 0.01 wt.% to 0.5 wt. % based on 100% weight of the total composition, excluding any filler.

Suitable antioxidants include, for example, organophosphites such as tris(nonylphenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)]methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tertbutyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3 ,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants are generally used in amounts of 0.01 wt.% to 0.5 wt. % based on 100% weight of the total composition, excluding any filler.

Suitable light stabilizers include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers are generally used in amounts of from 0.1 wt. % to 1.0 wt. %, based on 100 parts by weight of the total composition, excluding any filler.

### Methods for Forming Thermoplastic Compositions

Aspects of the disclosure further relate to methods for forming a thermoplastic composition, the method including:
Forming a PTA monomer by depolymerizing a post-consumer or post-industrial recycled (PCR) polyethylene terephthalate (PET)
polymerizing the PTA monomer under conditions effective to form polybutylene terephthalate (PBT); and
   combining
   from about 15 wt% to about 98 wt% of the PBT,
   from about 2 wt% to about 10 wt% of at least one brightening agent, and
   from 0 wt% to about 83 wt% of at least one additional component,
to form the thermoplastic composition.

The high purity PTA monomer is formed by depolymerizing post-consumer or post-industrial recycled (PCR) polyethylene terephthalate (PET) according to the aspects described herein.

The thermoplastic composition formed according to the method may include any of the components and in any of the amounts described herein.

### Articles of Manufacture

In certain aspects, the present disclosure pertains to shaped, formed, or molded articles including the thermoplastic compositions described herein. The thermoplastic compositions can be molded into useful shaped articles by a variety of means such as injection molding, extrusion, rotational molding, blow molding and thermoforming to form articles, structural components or functional components of, for example, personal or commercial electronics devices, including but not limited to cellular telephones, tablet computers, personal computers, notebook and portable computers, and other such equipment, medical applications, RFID applications, automotive applications, and the like.

Various combinations of elements of this disclosure are encompassed by this disclosure, for example, combinations of elements from dependent claims that depend upon the same independent claim.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to a composition including "a filler" includes compositions having two or more fillers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, "polybutylene terephthalate" (PBT) can be used interchangeably with poly(1,4-butylene terephthalate). PBT is a type of polyester, and has a structure represented by the formula:

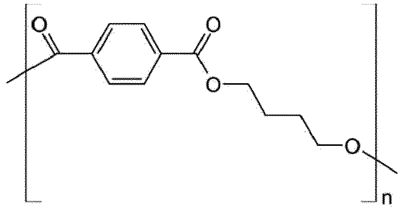

As used herein, "polyethylene terephthalate" (PET) can be used interchangeably with poly(ethyl benzene-1,4-dicarboxylate). As with PBT, polyethylene terephthalate is a type of polyester and has a structure represented by the formula:

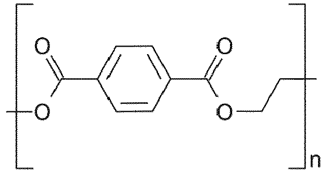

The terms "BisA," "BPA," or "bisphenol A," which can be used interchangeably, as used herein refers to a compound having a structure represented by the formula: 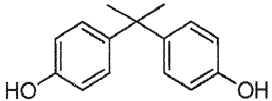 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

Optical properties, such as color coordinates, may be measured on any suitable instrument under appropriate conditions. For example, an X-RITE Gretag Macbeth COLOR EYE™ 7000A Spectrophotometer CE7000A with D65 illumination in a 10° observer in reflection mode may be employed. Assessments may be made according to the International Commission on Illumination (CIE) providing values for colorimetric coordinates L^{∗}, a^{∗}, b^{∗}. The coordinates correspond to different color attributes: a^{∗} represents redness and green; b^{∗}, yellow and blue; and L^{∗}, whiteness. Values of L^{∗} range between 0 and 100. Lower L^{∗} values correspond to darkness of a material while values of L^{∗} greater than 70 correspond to materials appearing white to the naked eye. The present disclosure may provide PBT formed from polymerized PTA derived from PCR PET. The disclosed PBT compositions may have an L^{∗} value of greater than 83, greater than 94, greater than 96, greater than 97.

As used herein, the term "post-consumer recycled PET," or "recycled PET," or "postindustrial recycled PET" refers to a recycled PET that comprises at least one impurity not present in a corresponding, substantially similar or identical virgin PET. The PET may be reclaimed from post-consumer sources, including but not limited to, home appliances waste *for example* TV, air-conditioners, washing machines, refrigerators, and like. Irrespective of the source, the recycled PET component can be similar or even identical to those virgin plastic components, known as impact modifier components, that are conventionally used in the manufacture of impact modified thermoplastic blend compositions. However, an important difference between the virgin plastic components and recycled plastics utilized in the present compositions, it the presence of at least one impurity that is not present in a virgin material. For example, one or more additives conventionally used in the manufacture of impact modified thermoplastics can be present as an impurity. Additional impurities can include processing residues such as lubricants, mold release agents, antistatic agents, stabilizers, light stabilizers, flame retardants, metals (e.g. iron, aluminum, and copper). Still further, the impurities can include polyurethane particles that cannot be fully removed during the recycling process.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Aspects of the Disclosure

In various aspects, the present disclosure pertains to and includes at least the following aspects.
Aspect 1. A thermoplastic composition comprising: from about 15 wt% to about 98 wt% of a polybutylene terephthalate (PBT) component; and from 0 wt% to about 85 wt% of at least one additional component, wherein the PBT component comprises PBT derived from post-consumer or post-industrial recycled (PCR) polyethylene terephthalate (PET), and wherein the thermoplastic composition has an L^{∗} color value of at least about 84.
Aspect 2. The thermoplastic composition of aspect 1, wherein the additional component comprises at least one brightening agent present in an amount from 2 wt. % to about 10 wt. %.
Aspect 3. A thermoplastic composition comprising: from about 15 wt% to about 98 wt% of a polybutylene terephthalate (PBT) component; from about 2 wt% to about 10 wt% of at least one brightening agent; and from 0 wt% to about 83 wt% of at least one additional component, wherein the PBT component comprises PBT derived from post-consumer or post-industrial recycled (PCR) polyethylene terephthalate (PET), and wherein the thermoplastic composition has an L^{∗} color value of at least about 94.
Aspect 4. The thermoplastic composition according to aspects 1-3, wherein the PBT is derived from PCR PET by first depolymerizing the PCR PET to form a high purity bis(2-hydroxyethyl) terephthalate (BHET) monomer, and then polymerizing the high purity BHET monomer with butane diol (BDO) to form the PBT.
Aspect 5. The thermoplastic composition according to aspects 1-4, wherein the high purity BHET monomer has a purity of at least about 95%.
Aspect 6. The thermoplastic composition according to any of aspects 3-5, wherein the at least one brightening agent comprises titanium dioxide (TiO₂), zinc sulfide (ZnS), or a combination thereof.
Aspect 7. The thermoplastic composition according to any of aspects 1 to 6, wherein the thermoplastic composition further comprises from greater than 0 wt% to about 0.5 wt% of a fluorescent whitening agent.
Aspect 8. The thermoplastic composition according to any of aspects 1 to 7, wherein the composition comprises from about 2 wt% to about 5 wt% of the at least one brightening agent.
Aspect 9. The thermoplastic composition according to any of aspects 1 to 8, further comprising at least one additional component comprising an additional thermoplastic polymer, a filler, an impact modifier, a pigment, a whitening agent, a surfactant, a processing aid, a thermal stabilizer, a flame retardant, a photochemical stabilizer or a combination thereof.
Aspect 10. The thermoplastic composition according to any of aspects 1 to 9, wherein the composition comprises from about 15 wt% to about 60 wt% of the PBT component, and wherein the composition has an L^{∗} color value of at least about 96.
Aspect 11. The thermoplastic composition according to any of aspects 1 to 8, wherein the composition comprises from about 15 wt% to about 30 wt% of the PBT component, and wherein the composition has an L^{∗} color value of at least about 97.
Aspect 12. A method for forming a thermoplastic composition, comprising: polymerizing a high purity bis(2-hydroxyethyl) terephthalate (BHET) monomer with butane diol (BDO) to form polybutylene terephthalate (PBT); and combining from about 15 wt% to about 98 wt% of the PBT, from about 2 wt% to about 10 wt% of at least one brightening agent, and from 0 wt% to about 83 wt% of at least one additional component, to form the thermoplastic composition, wherein the high purity BHET monomer is formed by depolymerizing post-consumer or post-industrial recycled (PCR) polyethylene terephthalate (PET).
Aspect 13. The method according to aspect 12, wherein the thermoplastic composition has an L^{∗} color value of at least about 94.
Aspect 14. The method according to aspect 12 or 13, wherein the high purity BHET monomer has a purity of at least about 95%.
Aspect 15. The method according to any of aspects 12-14, wherein the composition comprises from about 15 wt% to about 60 wt% of the PBT component, and wherein the composition has an L^{∗} color value of at least about 96.
Aspect 16. The method according to any of aspects 12-15, wherein the BDO is derived from a petroleum source or a bio-based source.
Aspect 17. A thermoplastic composition formed according to the method of any of aspects 12-16.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, for example, component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The polymerization process to form PBT was performed in a melt reactor designed for polycondensation reactions. A 39.7 gram (g) sample of PTA and 33.9g of BDO were introduced into the reactor. The reaction was conducted at 200 °C for 60 mins and then the temperature was increased to 230 °C, at a nitrogen N₂ pressure range of 800 mbar to 500 mbar in presence of 40 parts per million of titanium isopropoxide. The by-products water along with some unreacted BDO removed as distillates. The overhead samples also consisted of THF and water which are formed by cyclization of BDO under the reaction conditions. During this phase polymerization takes place via transesterification and excess BDO was removed along with balance traces of methanol, THF and water. Polymerization (IV) was monitored along with overhead compositions to achieve the required intrinsic viscosity. Once the polymerization is complete, the melt was removed and collected.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A thermoplastic composition comprising:
a. from about 15 wt% to about 98 wt% of a polybutylene terephthalate (PBT) component; and
b. from 0 wt% to about 85 wt% of at least one additional component,
wherein the PBT component comprises PBT derived from post-consumer or post-industrial recycled (PCR) polyethylene terephthalate (PET), and wherein the thermoplastic composition has an L^{∗} color value of at least about 84.

2. A thermoplastic composition comprising:
a. from about 15 wt% to about 98 wt% of a polybutylene terephthalate (PBT) component;
b. from about 2 wt% to about 10 wt% of at least one brightening agent; and
c. from 0 wt% to about 83 wt% of at least one additional component,
wherein the PBT component comprises PBT derived from post-consumer or post-industrial recycled (PCR) polyethylene terephthalate (PET), and wherein the thermoplastic composition has an L^{∗} color value of at least about 94.

3. The thermoplastic composition according to claim 1 or 2, wherein the PBT is derived from PCR PET by first depolymerizing the PCR PET to form a high purity bis(2-hydroxyethyl) terephthalate (BHET) monomer, and then polymerizing the high purity BHET monomer with butane diol (BDO) to form the PBT.

4. The thermoplastic composition according to claim 1 or 2, wherein the high purity BHET monomer has a purity of at least about 95%.

5. The thermoplastic composition according to any of claims 2 to 3, wherein the at least one brightening agent comprises titanium dioxide (TiO₂), zinc sulfide (ZnS), or a combination thereof.

6. The thermoplastic composition according to any of claims 1 to 4, wherein the thermoplastic composition further comprises from greater than 0 wt% to about 0.5 wt% of a fluorescent whitening agent.

7. The thermoplastic composition according to any of claims 1 to 5, wherein the composition comprises from about 2 wt% to about 5 wt% of the at least one brightening agent.

8. The thermoplastic composition according to any of claims 1 to 6, further comprising at least one additional component comprising an additional thermoplastic polymer, a filler, an impact modifier, a pigment, a whitening agent, a surfactant, a processing aid, a thermal stabilizer, a flame retardant, a photochemical stabilizer or a combination thereof.

9. The thermoplastic composition according to any of claims 1 to 7, wherein the composition comprises from about 15 wt% to about 60 wt% of the PBT component, and wherein the composition has an L^{∗} color value of at least about 96.

10. A method for forming a thermoplastic composition, comprising:
a. polymerizing a high purity bis(2-hydroxyethyl) terephthalate (BHET) monomer with butane diol (BDO) to form polybutylene terephthalate (PBT); and
b. combining
i. from about 15 wt% to about 98 wt% of the PBT,
ii. from about 2 wt% to about 10 wt% of at least one brightening agent, and
iii. from 0 wt% to about 83 wt% of at least one additional component,
c. to form the thermoplastic composition,
wherein the high purity BHET monomer is formed by depolymerizing post-consumer or post-industrial recycled (PCR) polyethylene terephthalate (PET).

11. The method according to claim 10, wherein the thermoplastic composition has an L^{∗} color value of at least about 94.

12. The method according to claim 10 or 11, wherein the high purity BHET monomer has a purity of at least about 95%.

13. The method according to any of claims 10 to 12, wherein the composition comprises from about 15 wt% to about 60 wt% of the PBT component, and wherein the composition has an L^{∗} color value of at least about 96.

14. The method according to any of claims 10 to 13, wherein the BDO is derived from a petroleum source or a bio-based source.

15. A thermoplastic composition formed according to the method of any of claims 10 to 14.
